# EUROPEAN PATENT APPLICATION

(11) **EP 2 178 263 A1**
(43) Date of publication of application: **21.04.2010**
(21) Application number: 07712566.4
(22) Date of filing: 12.02.2007
(51) Int. Cl.: H04L 29/06

(54) **METHOD AND SYSTEM FOR THE DYNAMIC GENERATION OF VIDEO CONTENT FROM INTERACTIVE APPLICATIONS DEVELOPED USING STANDARD WEB APPLICATION PROGRAMMING TOOLS**

(71) Applicant: Progescar 2000, S.a., 28500 Arganda Del Rey, Madrid (ES)
(72) Inventor: ORTIZ GARCÍA, Fernando, 28500 Arganda del Rey - Madrid (ES); CATALÁN LOECHES, Luis, 28500 Arganda del Rey - Madrid (ES)
(74) Representative: ABG Patentes, S.L.
(86) International application number: PCT/ES2007/000076
(87) International publication number: WO 2008/099026

(57) **Abstract**

Method and system for the dynamic generation of video content from interactive applications developed with standard Web programming tools. The system comprises the modules (52, 53 and 54) necessary to allow it to be carried out, the transcoding between the content present in a virtual Web navigator and the final user Terminal that accesses them. The method of embodiment includes the procedures that must be followed, using standard programming tools, when developing the applications.

## Description

### TECHNICAL FIELD OF THE INVENTION

The applicable field of the invention is comprised within the industrial sector of telecommunications in general, and more specifically in everything related to the generation of video-content and the development of interactive video-telephony applications in environments of 3G video calls accessible from any mobile device with the capability of establishing a connection with video (UMTS, CDMA, HSDPA, WIFI, WIMAX technologies, etc...)

### BACKGROUND OF THE INVENTION

Nowadays, the generation of video content and 3G video call applications is based on development environments which are limited to the reproduction of audio/video files that are fixed or stored locally or in RTSP multimedia servers. In addition to these "pre-packaged" files, there exists the possibility of using live video sources during a 3G video call, such as WebCams, security cameras, video-agents, etc.

With the tools available today only certain types of 3G video call applications can be performed on previously stored content (menus, films, etc.), but it is not possible to show information generated in real time that because of its dynamic and changing character cannot be stored previously (stock exchange, weather forecasts, traffic, financial information, real time video, etc.).

Some advanced systems of 3G development permit using a concept called Text Overlay, which allows for the superimposition of text over a fixed video in a more or less controlled and dynamic manner, but without being able to accurately calculate the position of the overlaid fixed text and with limited typographic capabilities.

In all cases the development of the interactive applications with 3G platforms is tedious and complex as it is based on the sending to the mobile telephone screen of the calling phone of previously stored video images, applications and routines servers owned by each manufacturer.

The content provider or developer again finds here a sometimes insurmountable obstacle, given that the original format of the video available (whether in real time or previously stored video) is almost never suitable to be used directly by the video content platforms. It is then required a video format transcoding which is very costly in terms of computer processing and which often entails loss of quality and synchronism.

### DESCRIPTION OF THE INVENTION

The present invention relates to a method for the quick, direct and simple running of all types of interactive applications which can be performed by means of a mobile device with the capability to establish a connection with video, particularly a third generation (3G) mobile telephone and the UMTS network or any mobile user device with capability of establishing a connection with video. This system provides essential novel characteristics and notable advantages with respect to the means known and used for the same purposes in the current state of the art.

More specifically, the object of the invention consists of an architecture which comprises a series of modules necessary to permit that said interactive applications can be carried out, efficiently and quickly, using interfaces and standard Web programming tools which can allow for the production and generation of content to 3G devices from pre-existing applications or from applications of easy implementation in QCIF *(Quarter Common Intermediate Format)* format or other formats that adapt to 3G mobiles.

This and other objects of the invention are achieved by means of a method according to claim 1, a system according to claim 11 and a computer programme according to claim 14. The particular embodiments of the method object of the invention are defined in dependent claims 2 to 10, and those corresponding to the system in dependent claims 12 and 13.

The difficulty of generating these types of applications, adjusting and transcoding the video formats of the current state of the art, thereby disappears. With the **DCSC** (Dynamic Content Service Creation) method and system for the dynamic generation of content which are objects of the present invention standard programming tools can be used, such as, for example, jsp, .NET, PHP, Macromedia Flash, etc.

The present invention is, therefore, centered on the dynamic creation of content by using the multimedia capabilities of the current information systems based on WEB, and on the interactive mechanisms therewith by the user who gains access to them through a mobile device with capability to make a video call, so that what can be shown on a WEB page will be able to be shown in real time in a 3G video call.

New mechanisms have also been implemented which permit the programming of the applications so that the user who calls the video content platform can interact with the underlying web application, without it being necessary to previously download any computing application to the mobile device.

From the point of view of the added value service companies who offer video services to the users, the possibilities of business generation will be increased exponentially given that they will be able to offer the users of their services much more flexible and useful information than simple, previously stored "pre-packaged" videos.

Some examples of application would be dynamic video application are:
- Video Mailbox with incoming video messages folder
- 3G Video Home Automation
- Online Games
- Real time information system

Finally, the system object of the present invention permits a substantial savings in infrastructure as it only requires, as 3G platform infrastructure, an access port or "gateway" and the dynamic content creation server module itself which will be called "Media Server DCSC" or MSDCSC.

### BRIEF DESCRIPTION OF THE DRAWINGS

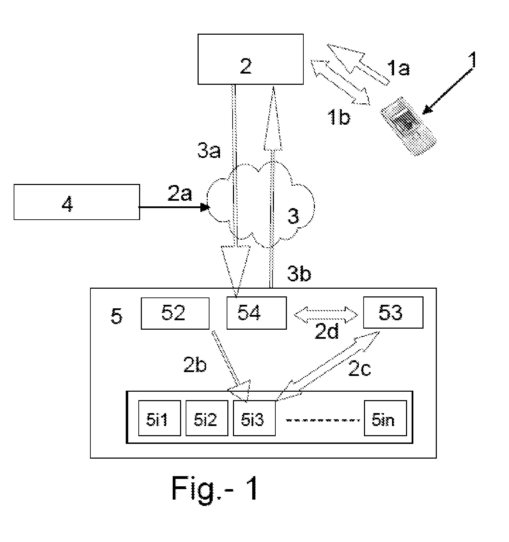

These and other characteristics and advantages of the invention will be more clearly stated from the detailed description that follows of a preferred example of embodiment, given solely by way of an illustrative and non-limitative example, with reference to the figure (figure 1) which is attached, wherein a block diagram of a preferred embodiment has been represented, by means of which is provided a general diagram of the system or succession of actions proposed by the invention for the final implementation of the desired application with the use of a mobile telephone with capabilities of making video calls (3G) and by means of transmission via the UMTS network or other broadband networks.

### DETAILED DESCRIPTION OF A PREFERRED ENIBODIMENT OF THE INVENTION

As has been indicated in the foregoing, the detailed description of the invention is going to be carried out taking into consideration the representations of the attached drawings, wherethrough the same numeric references are used to designate the same or similar parts. In this aspect, in the only figure of the invention an example of the system can be observed in relation to the actions followed for performing an interactive application of the type proposed, by means of a mobile telephone with the capability of establishing a video connection with a video content platform.

Examples of technologies with capability of making a video connection are the 3G-UMTS, HSDPA, CDMA, WIFI, WIMAX etc. technologies. In this explanation the mobile device is that which allows for the establishment of a video connection through, for example, a packet-switched network or a switched telephone network.

In the same way, this explanation will only mention third generation 3G telephone terminals and the UMTS network, although as has been stated, the method and system of the invention are applicable to any device which permits establishment of a connection with video.

In a more detailed manner, the system proposed by the invention is designed so that it is possible to carry out with it the entire process associated to the access from a 3G telephone to web applications, this process being formed by a first phase (1a) wherein the user (1) makes a video call from a 3G telephone to the telephone number of the video content platform (2). By making this video call (1a), the user (1) gains access to the 3G access platform (2) of the content provider, a platform (2) which can be its own (single entity) or shared (multi entity) so that the owner of the system object of this invention can render services to more than one content provider simultaneously.

Once the 3G platform (2) responds to the call a session (3a) will be opened based on the content of the applications server (4). This session (3a) is established through the IP network (3) against the MSDCSC dynamic content creation module (5) and a return video IP channel (3b) is established based on RTP *(Real-time transport Protocol)* protocol/transport. This process automatically creates the communication channels between the 3G access platform (2) and the MSDCSC module (5) object of this invention. This creation process of a two-way communication channel is identified in figure 1 with the numerical reference (2a).

At that moment, the 3G platform (2), via the applications server module (4), orders the MSDCSC module (5) to navigate through active virtual Web pages in a Web server module (52) which forms an integral part of the MSDCSC module (5). This Web server module (52) is designed to "fit" in its virtual memory "n" virtual explorers where the applications and content that the user sees are running, and that have been generated with standard programming tools following the procedures.

In the Figure these "virtual screens" are identified as modules 5i1, 5i2, 5i3, ... 5in, and form an integral part of the system object of the present invention. The information from the Web server module (52) can also correspond to information coming from any application or programme under execution contained in an active window of the operating system.

In a particular embodiment, the virtual Web pages of the Web server module (52) use the QCIF format (176x144 pixels). In any case, the essence of the invention continues to remain and is even enhanced, since other types of video formats of any resolution are also permitted.

The active session (3a) of the calling user can view one of those "n" virtual screens, according to an assignation by the applications server module (4) depending on the application, this phase being identified in Figure 1 with the numerical reference (2b). Once the MSDCSC module (5) is navigating the corresponding page of the Web server module (52), this is already being seen in the 3G mobile through the video channel (3b) established between the access platform (2) and the MSDCSC module (5).

The function of video streaming in real time (RTP or *Real Transfer Protocol)* is performed by the module (54). The function of transcoding between the virtual screen and the video streaming generator (54) is carried out by a transcoding module (53) which is continuously two-way monitoring said virtual screen in a process identified as (2c), and supplies the video streaming server module (54) already with a valid format for the recipient, in the stage identified as (2d).

Specifically, the transcoding module (53) samples the video memory of the "virtual screen" in real time with a variable cadence of frames per second (typically 15 or 30) and encodes them in real time according to the characteristics of the established video call, typically under the regulation or specification H263 or H264.

The monitoring (2c) of the virtual screen described in the foregoing paragraph includes the capture of image and video in real time and in parallel for all the sessions as well as the capture of audio in the event that the virtual explorer was reproducing an application equipped with sound. The transcoding of the translating module (53) also permits the monitoring of all type of virtual screen size adapting (scaling) its content to the real size of the calling mobile device.

The calling user (1) can interact with the keypad of their telephone with the MSDCSC module (5), which will receive said digits or keystrokes and will send them to the Web server module (52) through the HTTP/SOAP session established therewith. This will permit the caller to navigate Web pages that they are viewing by sending them commands from their keypad. The content that they wish to offer can therefore be programmed with the standard Web page generation tools, the system object of this invention performing all the transcodings and intermediate steps necessary to offer them automatically on the screen of a mobile device with capability of establishing a call with video.

Carrying out these types of applications entails respecting certain basic programming regulations and methodologies of the Web Application whose procedure and details form part of the invention.

In order to do that, the web applications accessible under this system must act, not based on commands or selections generated by mouse movements or keystrokes or introduction of text in the case of forms (these options are not always available at a user terminal), but rather to exclusively receive these commands or selections through keystrokes of the keys, i.e. through DTMF multifrequency tones (numbers 0 to 9 and asterisk and pound).

On the other hand, the applications should preferably be prepared to show their content in the space defined in QCIF, i.e. 176x144 pixels. If the applications require more space to show the information, they must procure that by means of certain reserved keys (amongst those previously mentioned) the user can move vertically and/or laterally the content, in order to show it in the QCIF viewing area that is shown on the screen of the user's device.

In practice, the system of the invention permits any type of format, the transcoding module (53) performing the re-dimensioning function, i.e. going from resolution a x b of the virtual pages to another resolution a' x b' of the user's device, at the expense of a greater CPU consumption of the MSDCSC module (5).

The operation of the modules represented in the Figure is undertaken by means of the programming of said modules with one or more computer programmes.

The previously mentioned method has been developed preferably for access from mobile devices, but that must not be understood as limitative given that the system could be applied for the dynamic generation of content to be accessed by any other device.

## Claims

1. Method for the dynamic generation of video content from interactive applications developed using standard web programming tools and which will be accessible by means of a fixed or mobile device with the capability of establishing a connection with video, video access or video call, which comprises the following phases:
- a first phase (1a), wherein the user (1) makes a video call (1a) accessing an access platform (2) to ask an applications server (4) for the address of the application that one wishes to access depending on the service required,
- a phase (2a), wherein the applications server (4) establishes the communication channels between the access platform (2) and a dynamic content generator (5),
- a phase (2b), wherein the applications server (4) commands the dynamic content generator (5) so that it navigates active virtual Web pages in a Web server module (52) by means of virtual explorers generated by the dynamic content generator (5) itself,
- a phase (2c), wherein the content present in the virtual explorer of original resolution a x b is transcoded in real time to the screen format of the terminal of the calling user of resolution a' x b' by means of a transcoding module (53),
- an execution phase wherein the content is provided to the user.

2. Method for the dynamic generation of video content according to claim 1, **characterized in that** after phase (2c), wherein the content present in the virtual explorer of original resolution a x b is transcoded in real time to the screen format of the terminal of the calling user of resolution a' x b', the aforementioned content is passed in a phase (2d) to a video streaming generator module (54) for its sending to the access platform (2).

3. Method for the dynamic generation of video content according to claims 1 or 2, **characterized in that** the transcoding of the transcoder module (53) comprises:
- sampling in real time the video memory of the virtual explorer screen with a variable cadence of frames per second, and
- encoding it in real time according to the characteristics of the video call established.

4. Method for the dynamic generation of video content according to claim 3, **characterized in that** the cadence is between 15 and 30 frames per second.

5. Method for the generation of video content according to any of claims 1 to 4, **characterized in that** the two-way sending of information between the access platform (2) and the dynamic content generator (5) is carried out through an IP network (3).

6. Method according to any of claims 1 to 5, **characterized in that** the information from the Web server module (52) corresponds to information from any application or programme under execution contained in an active window of the environment of the operating system, and not from the virtual explorer screen.

7. Method according to any of claims 1 to 6, **characterized in that** the fixed or mobile device is a third generation (3G) mobile telephone terminal that operates on a UMTS network, and the platform (2) is a 3G platform.

8. Method according to any of claims 1 to 6, **characterized in that** the fixed or mobile device is a mobile telephone terminal that operates on a network with CDMA technology, and the platform (2) is a CDMA platform.

9. Method according to any of claims 1 to 6, **characterized in that** the fixed or mobile device is a mobile telephone terminal that operates on a network with HSDPA, WIMAX or WIFI technology, and the platform (2) is a platform of the same technology.

10. Method according to any of claims 1 to 6, **characterized in that** the fixed or mobile device is a fixed telephone terminal with capability of establishing a video call.

11. System for the generation of 3G content from applications developed with standard web programming tools and which will be accessible by means of a fixed or mobile device with capability of establishing a connection with video, which comprises:
- an access platform (2) which receives a video call (1a) made by a user (1),
- an applications server (4) to inform the access platform (2) of the address of the application which one wishes to gain access to depending on the service required,
- an MSDCSC dynamic content generator (5) which comprises:
• A Web server module (52) which generates virtual web pages (5i1, 5i2, 5i3, ... 5 in) by means of virtual explorers generated by the dynamic content generator (5) itself,
• A transcoding module (53) that monitors the virtual web pages (5i1, 5i2, 5i3, ... 5in) and translates them into a valid format of the calling device, and
• A video streaming generator module (54), said video streaming being of the information from the translating module (53), and
- Communication channels between the access platform (2) and the MSDCSC dynamic content generator (5).

12. System for the generation of 3G content according to claim 11, **characterized in that** the communication channels between the access platform (2) and the MSDCSC dynamic content generator (5) operate on an IP network (3).

13. System for the generation of 3G content according to claim 11, **characterized in that** the Web module server (52) comprises information from any application or programme under execution contained in an active window of the operating system.

14. Computer programmes adapted to run one or several of the steps of claims 1 to 10.
